Europäisches Patentamt

European Patent Office

Office européen des brevets

(11) Publication number: **0 055 081**
**B1**

(12) **EUROPEAN PATENT SPECIFICATION**

(45) Date of publication of patent specification: **20.03.85**

(21) Application number: **81305924.3**

(22) Date of filing: **17.12.81**

(51) Int. Cl.⁴: **A 47 C 27/14,** C 08 J 9/36,
C 08 L 21/00, B 32 B 25/04,
C 08 K 3/22

(54) Moulded foam cushioning.

(30) Priority: **17.12.80 GB 8040441**

(43) Date of publication of application:
**30.06.82 Bulletin 82/26**

(45) Publication of the grant of the patent:
**20.03.85 Bulletin 85/12**

(84) Designated Contracting States:
**AT BE CH DE FR IT LI NL SE**

(56) References cited:
**CH-A- 335 938**
**GB-A-1 499 168**
**GB-A-1 519 795**
**GB-A-1 541 069**
**GB-A-1 589 858**

**CHEMICAL ABSTRACTS, volume 88, no. 26,
June 26, 1978, page 43, abstract 192104y
COLUMBUS OHIO (US)
CHEMICAL ABSTRACTS, volume 88, no. 22,
May 29, 1978, page 72, abstract 154059e
COLUMBUS OHIO (US)**

(73) Proprietor: **EniChem Elastomers Limited
Charleston Road
Hardley, Hythe Southampton S04 6YY (GB)**

(72) Inventor: **Davies, Alan Arthur
Jesmond Malwood Road West
Hythe Southampton (GB)**

(74) Representative: **Jones, Alan John et al
CARPMAELS & RANSFORD 43 Bloomsbury
Square
London, WC1A 2RA (GB)**

Courier Press, Leamington Spa, England.

## 0 055 081

**Description**

This invention relates to a method of increasing the fire resistance of moulded foam cushioning such as is used for cushions and in upholstery. The moulded foam cushioning which is treated by the method of the invention may be, for example, moulded latex foam rubber or moulded polyurethane foam. The characteristics of such cushioning are chiefly softness and resilience. The invention is likely to be of most use applied to polyurethane moulded foams in view of the predominance of such foams in cushioning and upholstery used in furniture.

Much attention is being given to the problem of reducing the risk of fire and the hazards when fires occur. This is of particular concern in the furniture business since fires are often traced to the ignition of cushioning or upholstery, for example, chair cushions and mattresses. In such cases, fatalities may be caused by the inhalation of noxious smoke and fumes given off in the combustion. Recently stricter legislation has been introduced or proposed in the United Kingdom and elsewhere in order to reduce the risk of ignition and propagation in upholstered furniture. One test is that specified in British Standard No. 5852, usually referred to as "the smouldering cigarette test." It is important that upholstered furniture satisfy this test to be acceptable to the distributors and customers. A second test is that specified in British Standard No. DD58:1978, usually referred to as "the butane flame test."

Recently methods have been studied to increase the char resistance of the foams. Some methods involve dipping the finished foam in a chemical composition. Others involve the inclusion of an additive in the latex foam compound during the foam manufacturing stage. At present, however, none of these methods provides the ideal answer to the problem since there may be, for example, an unacceptable deterioration in properties of the rubber foam. In another approach to the problem, a cellular polychloroprene sheet product has been used to enclose the cushioning material of upholstery in chairs but this is very expensive and further, noxious fumes (HCl, etc.,) can be produced should the fire catch hold.

Non-gel rubber latex foam has been known for many years, see for example Untiedt U.S. Patents Nos. 1,777,945 and 1,845,688 as well as U.K. Patent No. 332,526 (Dunlop). See also "Textile Month" July 1969 50—52 and "Modern Carpet back-finishing" R. Pollock, Textile Institute and Industry, January 1979. One advantage of such foams is that they can be produced from formulations containing a large amount of filler, for example, 200 and 350 phr (parts by weight per hundred parts of rubber). The filler for carpet-backing applications is, for example, clay or calcium carbonate.

Surprisingly we have now found that a thin layer of certain filled non-gel rubber latex foams based on hydrocarbon rubbers have considerable resistance to ignition and flame propagation.

According to the present invention, there is provided a method of making moulded foam cushioning more resistant to fire, comprising enclosing the cushioning with a thin layer of a filled non-gel rubber latex foam prepared from a latex composition comprising a styrene-butadiene rubber latex, or a polybutadiene latex or a blend thereof and 200 to 350 parts (by weight per hundred parts dry weight of rubber) of a fire-retarding filler. The present invention also includes moulded foam cushioning enclosed in accordance with this method. The invention further includes furniture having moulded foam cushioning or upholstery enclosed in accordance with this method.

The non-gel rubber latex foam used in the process of the invention is prepared from styrene-butadiene rubber latex or polybutadiene rubber latex of a blend thereof. These are widely available general purpose synthetic rubber latices.

The preferred fire retarding filler for the non-gel latex foam is aluminium trihydrate. The non-gel foam, after being compounded with the 200—350 phr of such a filler, may be foamed, spread and dried as in normal carpet backing or carpet underlay manufacture. Preferably, the foam is produced unsupported, that is with no hessian or other substrate as an integral backing using, for example, "Monocel" ("Monocel" is a trade mark) techniques. The foam of thickness, for example, 7 mm, is then applied to the cushion or upholstered foam by shaping to the required form and then laminating to produce a foam block encased with a thin layer of fire resistant filled non-gel rubber latex foam. This thin layer protects the foam block from ignition by an external heat source.

The use of the specific non-gel rubber latex foam layer according to the invention provides a relatively inexpensive, yet effective, method of increasing the fire resistance of moulded foam cushioning. In the event of combustion, fewer noxious materials are evolved since halogen containing components are not used. Furthermore, the feel and comfort of the cushioning are noticeably enhanced. It is particularly surprising that a foam layer prepared from a hydrocarbon rubber latex, such as styrenebutadiene rubber, is effective in increasing fire resistance since such rubbers would be expected to be more, not less combustible.

The following is a typical formulation for the production of a non-gel foam suitable for enclosing a moulded foam cushioning to give a cushioning capable of passing the smouldering cigarette test.

**O 055 081**

|  | Dry weight | Wet weight |
|---|---|---|
| INTEX 100 | 100.0 | 153.8 |
| Sodium lauryl sulphate | 0.75 | 2.5 |
| Sodium hexametaphosphate | 0.5 | 5.0 |
| Sulphur | 2.5 | 5.0 |
| Zinc mercaptobenzthiazole | 0.5 | 1.0 |
| Zinc diethyl dithio carbamate | 1.5 | 3.0 |
| Zinc oxide | 3.0 | 6.0 |
| Antioxidant | 1.0 | 3.0 |
| Emulsifier—long chain sulphosuccinamate (ALCOPOL FA)[2] | 5.0 | 15.0 |
| Aluminium trihydrate | 225.0 | 225.0 |

[1] INTEX is a styrene-butadiene latex of 65% by weight solids content of bound styrene content about 23%, sold by The International Synthetic Rubber Company, Limited.

[2] ALCOPOL FA is sold by Allied Colloids Limited.

Polyurethane foam cushioning (Dunlopillo Grade D7) enclosed in 1 centimetre thick layers of non-gel rubber latex foams, prepared according to the invention, have been tested by The Furniture Industries Research Association, Stevenage, Hertfordshire, England, in ignitability tests according to British Standard Specification 5852 Part 1, 1979, and British Standard Specification DD58:1978, using various fabric cover materials. In the case of the BS 5852 tests a pass was obtained in each test, the foam layer being damaged only superficially. In the case of the more severe test (BS DD58:1978) the ignition resistance was increased to pass the test using ignition sources 4 and 5, whereas without the foam layer a fail result was obtained.

**Claims**

1. A moulded foam cushioning enclosed in a thin layer of a filled non-gel latex foam prepared from a latex composition comprising a styrene-butadiene rubber latex, or a polybutadiene latex or a blend thereof and 200 to 350 parts (by weight per hundred parts dry weight of rubber) of a fire-retarding filler.

2. A moulded foam cushioning according to claim 1, in which the fire-retarding filler is aluminium trihydrate.

3. An article of furniture having a cushion or upholstery comprising a moulded foam cushioning according to claim 1 or claim 2.

4. A method of making moulded foam cushioning more resistant to fire, comprising enclosing the cushioning with a thin layer of a filled non-gel rubber latex foam prepared from a latex composition comprising a styrene-butadiene rubber latex, or a polybutadiene latex or a blend thereof and 200 to 350 parts (by weight per hundred parts dry weight of rubber) of a fire-retarding filler.

5. A method according to claim 4, in which the fire-retarding filler is aluminium trihydrate.

**Revendications**

1. Garnissage de mousse moulée, enrobé dans une mince couche d'une mousse de latex non gélifié chargée, préparée à partir d'une composition de latex comprenant un latex de caoutchouc de styrène/butadiène, ou un latex de polybutadiène ou un de leurs mélanges et de 200 à 350 parties (en poids pour 100 parties du poids sec de caoutchouc) d'une charge ignifugeante.

2. Garnissage de mousse moulée selon la revendication 1, dans lequel la charge ignifugeante est l'alumine trihydratée.

3. Elément de mobilier comportant un rembourrage ou captionnage comprenant un garnissage de mousse moulée selon la revendication 1 ou la revendication 2.

4. Procédé pour rendre un garnissage de mousse moulée plus résistant au feu, consistant à enrober le garnissage à l'aide d'une mince couche d'une mousse de latex de caoutchouc non gélifié, chargée, ladite mousse de latex non gélifié étant préparée à partir d'une composition de latex comprenant un latex de caoutchouc de styrène/butadiène, ou un latex de polybutadiène ou un de leurs mélanges, et 200 à 350 parties (en poids pour 100 parties de poids sec du caoutchouc) d'une charge ignifugeante.

5. Procédé selon la revendication 4, dans lequel la charge ignifugeante est l'alumine trihydratée.

**Patentansprüche**

1. Formgeschäumte Schicht, umschlossen von einer dünnen Schicht eines gefüllten, nicht gelartigen Latexschaums hergestellt aus einer Latexzusammensetzung, die aus einem Styrolbudatienkautschuklatex oder einem Polybutadienlatex oder einer Mischung davon und 200 bis 350 Teilen (bezogen auf das Gewicht pro 100 Teilen Trockengewicht des Kautschuks) eines feuerhemmenden Füllers enthält.

2. Formgeschäumte Schicht nach Anspruch 1, wobei der feuerhemmende Füller Aluminium-Trihydrat ist.

3. Gegenstand oder Einrichtungsstück mit einem Kissen oder einer Polsterung, enthaltend eine formgeschäumte Schicht nach Anspruch 1 oder 2.

4. Verfahren zur Herstellung einer formgeschäumten Schicht, die beständiger gegen Feuer ist, wobei die Schicht mit einer dünnen Schicht von einem gefüllten, nicht gelartigen Kautschuklatexschaum umschlossen wird, der hergestellt ist aus einer Latexzusammensetzung, enthaltend einen Styrol-Butadien-Kautschuklatex oder einen Polybutadien-Latex oder eine Mischung davon und 200 bis 350 Teile (bezogen auf das Gewicht pro 100 Teile Trockengewicht des Kautschuks) eines feuerhemmenden Füllers.

5. Verfahren nach Anspruch 4, wobei der feuerhemmende Füller Aluminium-Trihydrat ist.